# EUROPÄISCHE PATENTSCHRIFT

(11) **EP 2 755 859 B1**
(45) Veröffentlichungstag und Bekanntmachung des Hinweises auf die Patenterteilung: **12.10.2016**
(21) Anmeldenummer: 12762203.3
(22) Anmeldetag: 21.08.2012
(51) Int. Cl.: B60Q 1/50, B60Q 1/48, B62D 15/02, B60Q 1/32

(54) **VERFAHREN UND VORRICHTUNG FÜR EIN ASSISTENZSYSTEM IN EINEM FAHRZEUG ZUR DURCHFÜHRUNG EINES AUTONOMEN ODER TEILAUTONOMEN FAHRMANÖVERS**
METHOD AND DEVICE FOR AN ASSIST SYSTEM IN A VEHICLE FOR CARRYING OUT AN AUTONOMOUS OR SEMI-AUTONOMOUS DRIVING MANEUVER
PROCÉDÉ ET DISPOSITIF POUR UN SYSTÈME D'ASSISTANCE D'UN VÉHICULE SERVANT À EXÉCUTER UNE MAN UVRE AUTONOME OU PARTIELLEMENT AUTONOME

(30) Priorität: 08.09.2011 DE 102011112577
(43) Veröffentlichungstag der Anmeldung: 23.07.2014
(73) Patentinhaber: Continental Teves AG & Co. oHG, 60488 Frankfurt am Main (DE)
(72) Erfinder: ECKERT, Alfred, 55129 Mainz-Hechtsheim (DE); BAYER, Ronald, 63165 Mühlheim/Main (DE); LÜKE, Stefan, 61191 Rosbach vor der Höhe (DE); PILLER, Bernd, 63303 Dreieich (DE); HALASY-WIMMER, Georg, 71665 Vaihingen (DE)
(74) Vertreter: Bobbert, Christiana
(86) Internationale Anmeldenummer: PCT/DE2012/100246
(87) Internationale Veröffentlichungsnummer: WO 2013/034142

(56) Entgegenhaltungen:
- EP-A1- 2 000 356
- EP-A2- 1 334 869
- EP-A2- 1 916 153
- US-A1- 2009 013 922

## Beschreibung

Die Erfindung betrifft ein Verfahren und eine Vorrichtung für ein Assistenzsystem, das zur Durchführung eines autonomen oder teilautonomen Fahrmanövers eines Fahrzeugs dient, beispielsweise ein Parkassistenzsystem in einem Fahrzeug.

Seit einigen Jahren werden in Fahrzeugen vermehrt optische Sensorsysteme eingesetzt, insbesondere Kameras zur Erfassung des Fahrzeugumfeldes. Mittels spezieller elektronischer Einrichtungen und Software können diese Systeme verschiedene fahrerunterstützende Funktionen übernehmen, weshalb derartige Systeme auch unter der Bezeichnung Assistenzsysteme bzw. Fahrerassistenzsysteme bekannt sind. Einige dieser Assistenzsysteme sind bereits in der Lage autonome oder teilautonome Fahrmanöver durchzuführen, beispielsweise Einpark- und/oder Ausparkmanöver.

Ein System zur Einparkunterstützung ist beispielsweise aus der DE 10 2009 057 837 A1 bekannt. Das System dient in diesem Fall zur Unterstützung des Fahrers beim Einparken in eine Parkfläche einer Fahrzeuggarage. Mittels eines Kamerasystems wird die Umgebung des Fahrzeugs erfasst. Die Umgebungsbilder werden zur Erkennung der Garageneinfahrt der Fahrzeuggarage mit einem Bilderkennungsverfahren ausgewertet. Nach Erkennung der Garageneinfahrt wird das Umgebungsbild mit einem Zeichenerkennungsverfahren nach wenigstens einer auf einer Garagenrückwand angeordneten Markierung ausgewertet. Anschließend wird die Position des Fahrzeugs in Bezug auf die Garageneinfahrt und die Markierung ermittelt und es werden in Abhängigkeit der ermittelten Position des Fahrzeugs zur Steuerung des Fahrzeugs auf die Parkfläche erforderliche Lenkwinkel anzeigende Steuersignale erzeugt.
Die Steuersignale können als Lenkhinweise dem Fahrer angezeigt oder wenigstens einem Steuersystem zugeführt werden, um ein halbautomatisches oder vollautomatisches Fahren des Fahrzeugs auf die Parkfläche zu realisieren.

Für Assistenzsysteme zur Durchführung autonomer oder teilautonomer Fahrmanöver können heutzutage Sensorsystem eingesetzt, die in der Lage sind die gesamte Fahrzeugumgebung zu erfassen, im Sinne einer 360°-Sicht bzw. im Sinne einer Rundumsicht um das Fahrzeug, und mit dessen Ausgangssignalen in Form von detektierten Objekten rund um das Fahrzeug Fahrerassistenzfunktionen durchgeführt werden können. Die DE 10 2006 036 933 A1 zeigt hierzu ein Verfahren zur Erzeugung eines Gesamtbilds aus zumindest zwei überlappenden Einzelbildern, wobei die Einzelbilder durch an einem Kraftfahrzeug angeordnete Kameras erfasst und durch eine Bildverarbeitungseinrichtung zu dem Gesamtbild zusammengefügt werden.

Systeme wie in der DE 10 2006 036 933 A1 beschrieben, werden auch als TopView-Systeme oder omnidirektionale Kamerasysteme bezeichnet. TopView-Systeme umfassen typischerweise mehrere im oder am Fahrzeug angeordnete (reale) Aufnahmekameras, mit denen Bilddaten aus verschiedenen Bereich der Fahrzeugumgebung erzeugt werden. Die Bilddaten werden daraufhin in einer elektronischen Bilddatenverarbeitungseinrichtung unterschiedlichen Transformationen unterzogen und es wird ein zusammengesetztes Bild der gesamten Fahrzeugumgebung generiert. Dadurch kann beispielsweise eine Ansicht der um das Fahrzeug herum liegenden Umgebung aus einer Perspektive oberhalb des Fahrzeugdachs (Vogelperspektive) erhalten werden, d.h. es wird ein Bild einer (virtuellen) Kamera oberhalb des Fahrzeugs erzeugt. Das Gesamtbild kann dem Fahrer des Kraftfahrzeugs fortlaufend auf einer Anzeigevorrichtung angezeigt werden, beispielsweise um Rangier- oder Parkmanöver zu erleichtern, oder es können die Gesamtbilddaten durch Assistenzsysteme zur Durchführung autonomer und teilautonomer Fahrmanöver verarbeitet bzw. ausgewertet werden, beispielsweise zur Objekterkennung und zur Ableitung von Steuerbefehlen, z.B. zur Steuerung von Lenkung, Gas und Bremse(n) des Fahrzeugs.

Gerade bei Assistenzsystemen, die zur Durchführung von autonomen oder teilautonomen Fahrmanövern dienen, beispielsweise von Einpark- oder Ausparkmanöver, liegt jedoch eine hohe Prozessverantwortung bei diesen Systemen. Es muss insbesondere zu jeder Zeit während eines autonomen oder teilautonomen Fahrmanövers sichergestellt sein, dass andere Verkehrsteilnehmer (z.B. Passanten) nicht gefährdet werden und dass keine Schäden am eigenen oder an anderen Fahrzeugen entstehen.

Die EP 1 334 869 A2 offenbart bereits eine Vorrichtung für ein Fahrzeug, mittels derer Lichtstrahlen einer definierten Wellenlänge auf die Fahrbahnoberfläche ausgesendet werden, um den Fahrer des eigenen Fahrzeugs sowie Fahrer anderer Fahrzeuge über die Bewegungsbahn des eigenen Fahrzeugs zu informieren.

Das Dokument EP 1 334 869 A2 ist als nächstliegender Stand der Technik nach dem Oberbegriff des Anspruchs 1 zu sehen.

Der Erfindung liegt die Aufgabe zugrunde, die aus dem Stand der Technik bekannten Vorrichtungen und Verfahren zu verbessern, und dabei ein Verfahren und eine Vorrichtung für ein Assistenzsystem zur Durchführung von autonomen und teilautonomen Fahrmanövern anzugeben, wobei sichergestellt ist, dass die hohen Anforderungen betreffend die Prozessverantwortung des Assistenzsystems erfüllt werden und insbesondere eine Gefährdung für Mensch, Material und Umwelt weitgehend ausgeschlossen ist.

Diese Aufgabe wird durch Verfahren mit den Merkmalen nach Anspruch 1 und durch eine Vorrichtung mit den Merkmalen nach Anspruch 9 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, bei einem Assistenzsystem, das insbesondere ein TopView-System zur Durchführung eines autonomen oder teilautonomen Fahrmanövers nutzt und bei dem ein aus mehreren Einzelbildern zusammengesetztes Gesamtbild der Umgebung des Fahrzeugs verarbeitet wird, mittels wenigstens einer Lichtsignaleinrichtung wenigstens eine Richtung, in die sich das Fahrzeug bei dem autonomen oder teilautonomen Fahrmanöver bewegt, anzuzeigen. Hierdurch können Fahrzeuginsassen und andere Verkehrsteilnehmer, insbesondere Personen, die sich in der Nähe des Fahrzeugs aufhalten, über die vom Assistenzsystem beabsichtige Bewegungsrichtung und/oder über die genaue Bewegungstrajektorie (Fahrweg) des Fahrzeugs informiert werden. Durch die Anzeige der wenigstens einen Bewegungsrichtung können Unfälle vermieden bzw. es kann das Gefährdungspotenzial für Personen herabgesetzt werden. Besonders vorteilhaft, insbesondere bei Einsatz des erfindungsgemäßen Verfahrens bzw. bei Ausgestaltung der erfindungsgemäßen Vorrichtung mit einem TopView-System ist die Tatsache, dass aufgrund der Erfassung der gesamten Fahrzeugumgebung in einem Gesamtbild flexibel auf die jeweilige Umgebungssituation reagiert werden kann und die Bewegungsrichtung des Fahrzeug nur dann angezeigt werden kann, wenn im Gesamtbild zumindest ein anderer Verkehrsteilnehmer erkannt wird, und beispielweise nur dort angezeigt werden kann, wo sich andere Verkehrsteilnehmer aufhalten.

Das erfindungsgemäße Verfahren kommt bevorzugt bei einem Assistenzsystem zum Einsatz, das zur Durchführung eines autonomen oder teilautonomen Fahrmanövers eines Fahrzeugs dient.

Unter autonomen oder teilautonomen Fahrmanöver kann dabei grundsätzlich jedes Fahrmanöver eines Fahrzeugs verstanden werden, bei dem eine, mehrere oder alle Steuerungs- und Regelungsaufgaben vom Assistenzsystem übernommen werden, die ansonsten, d.h. bei manueller Durchführung des Fahrmanövers, vom Fahrzeugführer durchgeführt werden müssen, und damit insbesondere auch vollständig automatisierte Fahrmanöver, die durchgeführt werden, ohne dass der Fahrer im Fahrzeug sitzt. Das erfindungsgemäße Verfahren kommt insbesondere bei einem Assistenzsystem zum Einsatz, dass zur Durchführung eines autonomen oder teilautonomen Einpark- oder Ausparkmanövers dient. Unter einem teilautonomen Fahrmanöver kann in diesem Fall ein Einpark- und/oder Ausparkmanöver verstanden werden, bei dem das Assistenzsystem eine oder mehrere Regelungs- und Steuerungsaufgaben übernimmt, z.B. die Steuerung und Regelung der Fahrzeugbremse(n) und der Fahrzeuglenkung. Unter einem autonomen Fahrmanöver ist in dem Fall vorzugweise ein Fahrmanöver zu verstehen, bei dem sämtliche Steuerungs- und Regelungsaufgaben vom Assistenzsystem übernommen werden, die erforderlich sind, um das Fahrzeug aus einer IST-Position in eine SOLL-Position (z.B. Parkposition) zu bewegen, z.B. einschließlich der Regelung/Steuerung der Fahrzeugbeschleunigung (Gas).

Das Assistenzsystem, bei dem das erfindungsgemäße Verfahren zum Einsatz kommt, umfasst vorzugsweise ein Kamerasystem, mittels dem aus einer Fahrzeugumgebung Bilddaten erzeugt und zur Durchführung des Fahrmanövers verarbeitet werden. Die Erzeugung der Bilddaten erfolgt dabei bevorzugt mittels mehrerer Kameras, die auf unterschiedliche Bereiche der Fahrzeugumgebung ausgerichtet sind. Die Bilddaten können anschließend zur Durchführung des Fahrmanövers mittels Bildverarbeitungseinrichtungen geeignet verarbeitet werden, beispielsweise derart, dass aus den Bilddaten Objekte wie andere Fahrzeuge und Hindernisse erkannt, die Abstände zu den erkannten Objekten ermittelt, die Länge und Tiefe einer Parklücke berechnet und anhand dieser Informationen das notwendige Fahrmanöver einschließlich der erforderlichen Lenkwinkel abgeleitet werden. Zum Erkennen von Objekten und Hindernissen sowie zum Berechnen der Länge und Tiefe der Parklücke können neben dem Kamerasystem zudem auch weitere Sensoren eingesetzt werden, wie z.B. Ultraschall-, Radar-, Lidar- und Lasersensoren.

Erfindungsgemäß wird bei der Durchführung des autonomen oder teilautonomen Fahrmanövers mittels wenigstens einer Lichtsignaleinrichtung wenigstens eine Richtung, in die sich das Fahrzeug bei dem Fahrmanöver bewegt, (im Folgenden auch bezeichnet als: Bewegungsrichtung) angezeigt. Die Bewegungsrichtung kann dabei vor und/oder während des Fahrmanövers angezeigt werden, wobei es sich bei der angezeigten Richtung jeweils um die aktuelle und/oder zukünftige Bewegungsrichtung des Fahrzeugs handeln kann. Bei der Lichtsignaleinrichtung kann es sich um eine oder mehrere beliebig ausgestaltet Einrichtungen handeln, beispielsweise eine oder mehrere am und/oder im Fahrzeug angeordnete Lichtquellen, die derart ausgebildet und mit dem Kamerasystem bzw. mit dem Assistenzsystem verbunden sind, dass diese die Bewegungsrichtung des Fahrzeugs anzeigen können. Bevorzugt handelt es sich bei der wenigstens einen Lichtsignaleinrichtung nicht um die Einrichtungen Fahrzeugblinker und/oder Rücklicht oder um zusätzliche Lichtsignaleinrichtungen zu diesen bereits vorhandenen Komponenten.

Bei der wenigstens einen Lichtsignaleinrichtung zur Anzeige der Bewegungsrichtung handelt es sich vorzugsweise um wenigstens eine Lichtleiste, die am Fahrzeug angeordnet ist und die insbesondere mehrere einzelne nebeneinander angeordnete Lichtquellen umfasst. Die einzelnen Lichtquellen können dabei zur Anzeige der Bewegungsrichtung derart angesteuert werden, dass ein Lauflicht mit Laufrichtung in die wenigstens eine Richtung, in die sich das Fahrzeug bei dem Fahrmanöver bewegt, erzeugt wird. Bei der Lichtleiste kann es sich beispielsweise um eine LED-Flachleuchte handeln, die eine längliche Leiterplatine mit einer Vielzahl von entlang der Länge nebeneinander beabstandet angeordneten Leuchtdioden, LEDs, sowie eine transparente Lichtscheibenabdeckung und ein Gehäuse umfasst. Eine Lichtleiste bzw. die LED-Flachleuchte kann beispielsweise auf einer oder jeweils auf beiden Seiten des Fahrzeugs angeordnet sein, z.B. im Bereich der Fahrzeugtüren oder als Unterflurbeleuchtung am Fahrzeugboden, insbesondere im Bereich zwischen der Vorder- und Hinterachse des Fahrzeugs. In einer besonderen Ausgestaltung können auch eine oder mehrere Lichtleisten im Innenraum des Fahrzeugs, z.B. im Bereich der Rahmen von Seitenscheiben, insbesondere an der Fensterlinie oberhalb der Türverkleidung, angeordnet sein. Bei entsprechender Ansteuerung kann die aktuelle oder die zukünftige Bewegungsrichtung des Fahrzeugs als Lauflicht, d.h. in Form einer sich bewegenden bzw. laufenden Lichterkette angezeigt werden. Ein außenstehender Fahrzeugführer, z.B. bei einem autonomen oder ferngesteuerten Fahrmanöver, und/oder andere Verkehrsteilnehmer können somit über die Bewegungsrichtung des Fahrzeugs informiert werden, insbesondere darüber, ob das Fahrzeug vorwärts oder rückwärts fährt bzw. fahren wird. Wird mittels der Lichtsignaleinrichtung beispielsweise angezeigt, dass das Fahrzeug als nächstes rückwärtsfahren wird, so kann die Umwelt noch vor dem eigentlich Fahrmanöver des Fahrzeugs agieren, ohne dass das Fahrmanöver, beispielsweise ein Einpark- oder Ausparkvorgang abgebrochen werden muss, weil sich z.B. Personen und/oder Hindernisse im Fahrweg befinden.

Erfindungsgemäß kann es sich bei der wenigstens einen Lichtsignaleinrichtung zur Anzeige der Bewegungsrichtung auch um wenigstens ein Projektionsmittel handeln, das am Fahrzeug angeordnet ist. Die wenigstens eine Richtung, in die sich das Fahrzeug bei dem Fahrmanöver bewegt, kann mittels des Projektionsmittels beispielsweise auf die Oberfläche der Fahrbahn projiziert werden. Die Projektion kann dabei unterschiedlich ausgestaltet sein, beispielsweise als projizierte Pfeil oder als projiziertes Lauflicht mit Pfeil- bzw. Laufrichtung in Bewegungsrichtung oder z.B. als linienförmige Bewegungstrajektorie, welche die für das Fahrmanöver geplante Trajektorie (den geplanten Fahrweg) anzeigt, entlang derer sich das Fahrzeug bewegt. Bei dem Projektionsmittel zur Anzeige der Bewegungsrichtung handelt es sich bevorzugt um einen Laser. Je nach Ausgestaltung des Assistenzsystems können beispielsweise einer oder mehrere Laser im Innenraum des Fahrzeugs, insbesondere hinter einer oder mehrere Scheiben, angeordnet sein und die Bewegungsrichtung durch die jeweilige Scheibe hindurch auf die Fahrbahnoberfläche projizieren.

In einer besonderen Ausgestaltung kann es sich bei der wenigstens einen Lichtsignaleinrichtung um beleuchtete Felgen und/oder um beleuchtete Radkappen handeln. In diesem Fall kann die wenigstens eine Lichtsignaleinrichtung z.B. als kreisförmige LED-Lichtleiste ausgestaltet sein, wobei die Bewegungsrichtung des Fahrzeugs beispielsweise als kreisendes Lauflicht mit Drehrichtung in Fahrtrichtung angezeigt werden kann.

In einer vorteilhaften Ausgestaltung wird die wenigstens eine Lichtsignaleinrichtung, neben der Anzeige der wenigstens einen Richtung, in die sich das Fahrzeug während des autonomen oder teilautonomen Fahrmanövers bewegt, zusätzlich zur Ausleuchtung wenigstens eines Bereichs der Fahrzeugumgebung verwendet. Bei dem wenigstens einen ausgeleuchteten Bereich der Fahrzeugumgebung kann es sich beispielsweise um einen Bereich in einer Garage oder Einfahrt handeln, wobei insbesondere für den Fall eine Ausleuchtung erfolgt, wenn anhand der Bilddaten des Kamerasystems erkannt wird, dass einer oder mehrere Bereiche der Fahrzeugumgebung eine Ausleuchtung aufweisen, die unterhalb eines bestimmten Helligkeitsgrenzwert liegt.
Die Ansteuerung der Lichtsignaleinrichtung zur Ausleuchtung des wenigstens einen Bereichs der Fahrzeugumgebung erfolgt vorzugsweise derart, dass der betreffende Bereich bzw. die betreffenden Bereiche gezielt ausgeleuchtet werden, um dunkle Bereiche in der Fahrzeugumgebung zu kompensieren und/oder um den Kontrast in den relevanten Bereichen zu maximieren.

Bei dem Kamerasystem des Assistenzsystems handelt es sich bevorzugt um ein System, bei dem mittels mehrerer Kameras Einzelbilder aus verschiedenen Bereichen der Fahrzeugumgebung erfasst und mittels Bildverarbeitungsmittel geeignet transformiert werden, um hierdurch ein Gesamtbild der Fahrzeugumgebung zu generieren. Bei dem Kamerasystem handelt es sich damit vorzugsweise um ein sogenanntes TopView-System. Zur Durchführung des Fahrmanövers, d.h. insbesondere zur Berechnung der Steuerungs- und Regelungsgrößen für das Fahrmanöver, wird dabei im Rahmen des erfindungsgemäßen Verfahrens bevorzugt das Gesamtbild der Fahrzeugumgebung verarbeitet. Besonders vorteilhaft an dieser Ausgestaltung des Verfahren ist die Tatsache, dass mittels des Gesamtbildes der Fahrzeugumgebung alle Bereiche um Umfeld des Fahrzeugs, beispielsweise hinsichtlich sich im geplanten Fahrweg aufhaltender Verkehrsteilnehmer, untersucht werden können und z.B. nur für den Fall, dass sich tatsächlich andere Verkehrsteilnehmer im Umfeld des Fahrzeug aufhalten, die Bewegungsrichtung des Fahrzeugs gemäß des erfindungsgemäßen Verfahrens angezeigt werden kann. Weiterhin kann in vorteilhafter Ausgestaltung des erfindungsgemäßen Verfahrens nur in den Bereich der Fahrzeugumgebung, z.B. nur auf der Seite des Fahrzeugs auf der sich andere Verkehrsteilnehmer befinden, die Bewegungsrichtung des Fahrzeugs angezeigt werden. Somit kann bei dieser Ausgestaltung des erfindungsgemäßen Verfahrens dynamischer bzw. flexibler auf die Umgebungssituation bei der Durchführung eines autonomen oder teilautonomen Fahrmanövers reagiert werden.

Erfindungsgemäß wird die wenigstens eine Richtung, in die sich das Fahrzeug bei dem autonomen oder teilautonomen Fahrmanöver bewegt, nur dann angezeigt, wenn im Gesamtbild zumindest ein anderer Verkehrsteilnehmer erkannt wird.

Weiterhin wird in einer bevorzugten Ausführung des erfindungsgemäßen Verfahrens, bei einem oder mehreren erkannten anderen Verkehrsteilnehmern in der Fahrzeugumgebung, und insbesondere dann, wenn mehrere Lichtsignaleinrichtungen am Fahrzeug angeordnet sind, nur diejenigen Lichtsignaleinrichtungen zur Anzeige der wenigstens einen Richtung angesteuert, die von dem einen oder den mehreren anderen Verkehrsteilnehmern wahrgenommen werden können. Bevorzugt werden dabei nur auf den Seiten des Fahrzeugs Lichtsignaleinrichtungen angesteuert, auf denen andere Verkehrsteilnehmer erkannt wurden.

Bei der wenigstens einen erfindungsgemäß angezeigten Richtung des Fahrzeug handelt es sich bevorzugt um eine der Fahrtrichtungen "Vorwärts" oder "Rückwärts" und/oder um die aktuelle oder zukünftige Richtung, in die sich das Fahrzeug bei dem Fahrmanöver bewegt.

Die erfindungsgemäße Vorrichtung zur Anzeige wenigstens einer Bewegungsrichtung eines Fahrzeugs umfasst bevorzugt ein Kamerasystem, das mittels mehrerer Kameras Einzelbilder aus verschiedenen Bereichen einer Fahrzeugumgebung erfasst und mittels Bildverarbeitungsmittel geeignet transformiert, um hierdurch ein Gesamtbild der Fahrzeugumgebung zu generieren. Die Vorrichtung umfasst weiterhin wenigstens eine Lichtsignaleinrichtung, zur Anzeige wenigstens einer Richtung einer Bewegung, die das Fahrzeug während eines autonomen oder teilautonomen Fahrmanövers ausführt. Erfindungsgemäß ist die Vorrichtung dabei derart ausgestaltet, dass zur Durchführung des autonomen oder teilautonomen Fahrmanövers des Fahrzeugs und zur Anzeige der wenigstens einen Bewegungsrichtung des Fahrzeugs das Gesamtbild der Fahrzeugumgebung verarbeitet wird, z.B. mit einer entsprechend ausgestalteten (gemeinsamen) Bilddatenverarbeitungseinheit.

## Patentansprüche

1. Verfahren für ein Assistenzsystem, das zur Durchführung eines autonomen oder teilautonomen Fahrmanövers eines Fahrzeugs dient, insbesondere eines Einpark- oder Ausparkmanövers, und bei dem mittels eines Kamerasystems aus einer Fahrzeugumgebung Bilddaten gewonnen und zur Durchführung des Fahrmanövers verarbeitet werden,
wobei mittels wenigstens einer Lichtsignaleinrichtung wenigstens eine Richtung, in die sich das Fahrzeug bei dem Fahrmanöver bewegt, angezeigt wird,
**dadurch gekennzeichnet, dass**
die wenigstens eine Richtung nur dann angezeigt wird, wenn in einem vom Kamerasystem erzeugten Gesamtbild der Fahrzeugumgebung zumindest ein anderer Verkehrsteilnehmer erkannt wird.

2. Verfahren nach Anspruch 1, **dadurch gekennzeichnet, dass** es sich bei der Lichtsignaleinrichtung um wenigstens eine Lichtleiste handelt, die am Fahrzeug angeordnet ist und mehrere nebeneinander angeordnete Lichtquellen umfasst, die zur Anzeige der wenigstens einen Richtung derart angesteuert werden, dass ein Lauflicht mit Laufrichtung in die wenigstens eine Richtung erzeugt wird.

3. Verfahren nach Anspruch 1 oder 2, **dadurch gekennzeichnet, dass**
es sich bei der Lichtsignaleinrichtung um wenigstens ein Projektionsmittel handelt, das am Fahrzeug angeordnet ist, wobei
die wenigstens eine Richtung mittels des Projektionsmittels auf eine Fahrbahnoberfläche projiziert wird.

4. Verfahren nach Anspruch 3, **dadurch gekennzeichnet, dass**
- es sich bei dem Projektionsmittels um einen Laser handelt und
- die wenigstens eine Richtung mittels des Lasers in Form einer Bewegungstrajektorie auf die Fahrbahnoberfläche projiziert wird.

5. Verfahren einem der vorangegangenen Ansprüche, **dadurch**
**gekennzeichnet, dass**
die wenigstens eine Richtung mittels beleuchteter Radkappen oder mittels beleuchteter Felgen angezeigt wird.

6. Verfahren nach einem der vorangegangenen Ansprüche,
**dadurch gekennzeichnet, dass**
die wenigstens eine Lichtsignaleinrichtung zusätzlich zur Ausleuchtung wenigstens eines Bereichs der Fahrzeugumgebung, insbesondere in Garagen und dunklen Einfahrten, verwendet wird.

7. Verfahren nach einem der vorangegangenen Ansprüche,
**dadurch gekennzeichnet, dass**
- es sich bei dem Kamerasystem des Assistenzsystems um ein System handelt, bei dem mittels mehrerer Kameras Einzelbilder aus verschiedenen Bereichen der Fahrzeugumgebung erfasst und mittels Bildverarbeitungsmittel geeignet transformiert werden, um hierdurch ein Gesamtbild der Fahrzeugumgebung zu generieren, und
- zur Durchführung des Fahrmanövers das Gesamtbild verarbeitet wird.

8. Verfahren nach einem der vorangegangenen Ansprüche,
**dadurch gekennzeichnet, dass**
bei einem oder mehreren erkannten Verkehrsteilnehmern, insbesondere wenn mehrere Lichtsignaleinrichtungen am Fahrzeug angeordnet sind, nur diejenigen Lichtsignaleinrichtungen zur Anzeige der wenigstens einen Richtung angesteuert werden, die von dem einen oder den mehreren Verkehrsteilnehmern wahrgenommen werden können.

9. Vorrichtung zur Anzeige wenigstens einer Bewegungsrichtung eines Fahrzeugs umfassend
- ein Kamerasystem, das mittels mehrerer Kameras Einzelbilder aus verschiedenen Bereichen einer Fahrzeugumgebung erfasst und mittels Bildverarbeitungsmittel geeignet transformiert, um hierdurch ein Gesamtbild der Fahrzeugumgebung zu generieren,
- eine Lichtsignaleinrichtung, zur Anzeige wenigstens einer Richtung einer Bewegung, die das Fahrzeug während eines autonomen oder teilautonomen Fahrmanövers ausführt, wobei
- zur Durchführung des autonomen oder teilautonomen Fahrmanövers des Fahrzeugs und zur Anzeige der wenigstens einen Bewegungsrichtung des Fahrzeugs das Gesamtbild der Fahrzeugumgebung verarbeitet wird,
**dadurch gekennzeichnet, dass**
die wenigstens eine Richtung nur dann angezeigt wird, wenn in dem vom Kamerasystem erzeugten Gesamtbild der Fahrzeugumgebung zumindest ein anderer Verkehrsteilnehmer erkannt wird.

## Claims

1. A method for an assistance system which is used for performing an autonomous or semi-autonomous driving manoeuvre of a vehicle, in particular getting into and out of parking spaces, and in which image data is captured from the surroundings of a vehicle by means of a camera system and processed in order to perform the driving manoeuvre, wherein by means of at least one light signal device at least one direction is displayed into which the vehicle is moved during the driving manoeuvre,
**characterised in that**
the at least one direction is only displayed if at least one other road user has been identified by the camera system in an overall view of the vehicle's surroundings.

2. The method according to claim 1, **characterised in that** the light signal device is at least one strip light which is arranged on the vehicle and comprises a plurality of light sources arranged next to one another which are controlled for displaying the at least one direction such that a moving light is produced which moves in at least one direction.

3. The method according to claim 1 or 2, **characterised in that** the light signal device is at least one projection means which is arranged on the vehicle, wherein the at least one direction is projected by the projection means onto a road surface.

4. The method according to claim 3, **characterised in that**
- the projection means is a laser and
- the at least one direction is projected by means of the laser in the form of a movement trajectory onto the road surface.

5. The method according to any one of the preceding claims, **characterised in that** the at least one direction is displayed by means of illuminated hub caps or by means of illuminated wheel rims.

6. The method according to any one of the preceding claims, **characterised in that** the at least one light signal device is used in addition for illuminating at least one area of the vehicle's surroundings, in particular in garages and dark entrances.

7. The method according to any one of the preceding claims, **characterised in that**
- the camera system of the assistance system is a system in which by means of a plurality of cameras individual images from different areas of the vehicle's surroundings are recorded and transformed as appropriate by image processing means in order to generate an overall view of the vehicle's surroundings, and
- the overall view is processed to perform the driving manoeuvre.

8. The method according to any one of the preceding claims, **characterised in that** if one or more road user(s) has/have been identified, in particular if a plurality of light signal devices are arranged on the vehicle, only those light signal devices are controlled for displaying the at least one direction which can be seen by the one or more road users.

9. A device for displaying at least one direction of movement of a vehicle comprising:
- a camera system which records individual images from different areas of the vehicle's surroundings by means of a plurality of cameras and transforms them as appropriate by image processing means in order to generate an overall view of the vehicle's surroundings in this way,
- a light signal device for displaying at least one direction of a movement that the vehicle is moving in during an autonomous or semi-autonomous driving manoeuvre, wherein
- the overall view of the vehicle's surroundings is processed for performing the autonomous or semi-autonomous driving manoeuvre of the vehicle and displaying the at least one direction of the movement of the vehicle,
**characterised in that**
the at least one direction is only displayed if at least one other road user has been identified by the camera system in the overall view of the vehicle's surroundings.

## Revendications

1. Procédé pour un système d'assistance qui sert à la réalisation d'une manoeuvre de conduite autonome ou partiellement autonome d'un véhicule, en particulier d'une manoeuvre d'entrée ou de sortie d'une place de stationnement, et dans lequel, au moyen d'un système de caméras, des données image sont acquises à partir d'un environnement du véhicule et sont traitées pour la réalisation de la manoeuvre de conduite, dans lequel, au moyen d'au moins un dispositif de signaux lumineux, au moins une direction dans laquelle le véhicule se déplace lors de la manoeuvre de conduite est affichée,
**caractérisé en ce que**
la direction au moins au nombre de un n'est affichée que si, dans une image globale de l'environnement du véhicule produite par le système de caméras, au moins un autre usager de la route est détecté.

2. Procédé selon la revendication 1, **caractérisé en ce que**, concernant le dispositif de signaux lumineux, il s'agit au moins d'une barrette lumineuse qui est disposée sur le véhicule et qui comprend plusieurs sources lumineuses juxtaposées qui sont commandées pour l'affichage de la direction au moins au nombre de un de telle sorte qu'une lumière de marche est produite avec une direction de marche dans la direction au moins au nombre de un.

3. Procédé selon la revendication 1 ou 2, **caractérisé en ce que**, concernant le dispositif de signaux lumineux, il s'agit au moins d'un moyen de projection qui est disposé sur le véhicule,
la direction au moins au nombre de un étant projetée sur la surface de la chaussée au moyen du moyen de projection.

4. Procédé selon la revendication 3, **caractérisé en ce que**
- concernant le moyen de projection, il s'agit d'un laser et
- la direction au moins au nombre de un est projetée sur la surface de la chaussée au moyen du laser sous la forme d'une trajectoire de déplacement.

5. Procédé selon l'une des revendications précédentes, **caractérisé en ce que** la direction au moins au nombre de un est affichée au moyen d'enjoliveurs éclairés ou au moyen de jantes éclairées.

6. Procédé selon l'une des revendications précédentes, **caractérisé en ce que** le dispositif de signaux lumineux au moins au nombre de un est utilisé en plus pour l'éclairage d'au moins une zone de l'environnement du véhicule, en particulier dans des garages et entrées sombres.

7. Procédé selon l'une des revendications précédentes, **caractérisé en ce que**,
- concernant le système de caméras du système d'assistance, il s'agit d'un système dans lequel, au moyen de plusieurs caméras, des images individuelles sont captées à partir de différentes zones de l'environnement du véhicule et sont transformées de façon appropriée au moyen de moyens de traitement d'images afin de générer de ce fait une image globale de l'environnement du véhicule, et
- l'image globale est traitée pour la réalisation de la manoeuvre de conduite.

8. Procédé selon l'une des revendications précédentes, **caractérisé en ce que**, en cas de détection d'un ou de plusieurs usagers de la route, en particulier quand plusieurs dispositifs de signaux lumineux sont disposés sur le véhicule, seuls les dispositifs de signaux lumineux qui peuvent être perçus par le ou les plusieurs usagers de la route sont commandés pour l'affichage de la direction au moins au nombre de un.

9. Dispositif destiné à l'affichage d'au moins une direction de déplacement d'un véhicule, comprenant
- un système de caméras qui, au moyen de plusieurs caméras, capte des images individuelles en provenance de différentes zones d'un environnement du véhicule et les transforme de façon appropriée au moyen de moyens de traitement d'images pour générer de ce fait une image globale de l'environnement du véhicule,
- un dispositif de signaux lumineux pour l'affichage d'au moins une direction d'un déplacement que le véhicule effectue pendant une manoeuvre de conduite autonome ou partiellement autonome,
dans lequel
- pour la réalisation de la manoeuvre de conduite autonome ou partiellement autonome du véhicule et pour l'affichage de la direction de déplacement au moins au nombre de un du véhicule, l'image globale de l'environnement du véhicule est traitée, **caractérisé en ce que**
la direction au moins au nombre de un n'est affichée que si, dans l'image globale de l'environnement du véhicule produite par le système de caméras, au moins un autre usager de la route est détecté.
